**Europäisches Patentamt**

**European Patent Office**

**Office européen des brevets**

(19)

(11) Veröffentlichungsnummer: **0 043 066**
**B1**

# EUROPÄISCHE PATENTSCHRIFT

(12)

(45) Veröffentlichungstag der Patentschrift:
06.04.83

(21) Anmeldenummer: 81104794.3

(22) Anmeldetag: 22.06.81

(51) Int. Cl.³: **B 22 D 39/00**, H 02 K 44/06

(54) **Kanal zum Regeln oder Fördern von Flüssigmetall.**

(30) Priorität: 02.07.80 DE 3024970

(43) Veröffentlichungstag der Anmeldung:
06.01.82 Patentblatt 82/1

(45) Bekanntmachung des Hinweises auf die Patenterteilung:
06.04.83 Patentblatt 83/14

(84) Benannte Vertragsstaaten:
AT BE CH DE FR GB IT LI LU NL SE

(56) Entgegenhaltungen:
GB-A-745 807
GB-A-873 807
NL-C-125 807
US-A-2 865 291
US-A-2 985 106

(73) Patentinhaber: INTERATOM Internationale
Atomreaktorbau GmbH, Friedrich-Ebert-Strasse,
D-5060 Bergisch Gladbach 1 (DE)

(72) Erfinder: Barzantny, Joachim, Im Wiesengrund,
D-5067 Kürten-Eichhof (DE)
Erfinder: Hans, Rainer, An der Wolfsmaar 6,
D-5060 Bergisch Gladbach 3 (DE)
Erfinder: Beske, Joachim, Mozartstrasse 6,
D-5060 Bergisch Gladbach 1 (DE)
Erfinder: Schliefer, Heinrich, Am Musterplatz 27,
D-2105 Seevetal 3 (DE)

(74) Vertreter: Mehl, Ernst, Dipl.-Ing. et al, Postfach 22 01 76,
D-8000 München 22 (DE)

## Kanal zum Regeln oder Fördern von Flüssigmetall

Die vorliegende Erfindung betrifft einen Kanal mit Rechteckquerschnitt zum Regeln oder Fördern eines Flüssigmetallstromes, insbesondere Kupfer oder Kupferlegierungen, mittels Induktionsspulen. Dieser Kanal ist geeignet sowohl für eine Dosiervorrichtung zum Regeln des Austritts eines Flüssigmetallstromes aus einem Behälter als auch für eine magneto-hydrodynamische Pumpe. In beiden Fällen kann entweder ein hoher Durchsatz oder ein hoher Druck des Flüssigmetalls von Interesse sein, bei der Verwendung als Dosiervorrichtung ist es erwünscht, den Flüssigmetallstrom zeitweilig zu verringern oder sogar ganz zum Stillstand zu bringen, indem eine Förderleistung aufgebracht wird, die der Strömung entgegenwirkt. Im übrigen kann die Strömungsrichtung im Kanal aufwärts, abwärts oder unter jedem beliebigen Neigungswinkel, also auch waagerecht, gewählt werden. Der Rechteckquerschnitt des Kanals hat sich als zweckmässig herausgestellt, weil die an den Breitseiten eines Rechteckkanals angeordneten Induktionsspulen auf das Flüssigmetall im Kanal einen grösseren Einfluss ausüben können, als in einem runden Kanal. An den schmalen Seiten eines solchen Rechteckkanals ist jedoch der Kraftfluss gestört, so dass dort unerwünschte Flüssigmetallbewegungen quer zur Hauptströmungsrichtung im Kanal auftreten. Dieses nennt man im Folgenden «Randgängigkeit».

In der DE-AS 11 20 079 wird eine Einrichtung zur Regelung der Fallgeschwindigkeit eines Stromes geschmolzenen Metalls beschrieben, bei der an einem senkrechten Strömungskanal von Rechteckquerschnitt an beiden Breitseiten je ein kammartig geschlitzter und parallel zur Strömungsrichtung ausgerichteter Magnetkern angebracht ist, der jeweils 19 Zähne und 18 miteinander verschaltete Induktionsspulen trägt. Der Kanal wird gebildet aus zahlreichen, untereinander durch feuerfesten Zement verbundenen Ringen, die sich ineinander fügen lassen und vorzugsweise aus Korund gefertigt sind. Die Ringe sind mit einer feuerfesten Masse ummantelt, die wärmeisolierend wirkt und beispielsweise aus einem in einer Hülle enthaltenen Aluminiumoxidpulver besteht.

In der DE-OS 20 35 329 wird eine verbesserte elektromagnetische Pumpe für flüssige Metalle beschrieben, die einen senkrechten, kreisrunden Kanal aufweist aus isolierendem, feuerfestem Material (beispielsweise Graphit) mit einer Metallverkleidung, die nicht oxydiert und einen hohen elektrischen Widerstand aufweist; ferner besteht sie aus einer konzentrischen Verkleidung aus einem thermisch isolierenden Material, die den Magnetkreis vor der von dem geförderten flüssigen Metall ausgestrahlten Wärme schützt.

In der Zeitschrift «Neue Hütte» – 21. Jg. – Heft 10 vom Oktober 1976 auf den Seiten 580–584 wird über Möglichkeiten des Transports flüssiger Metalle mittels elektromagnetischer Pumpen berichtet. Als Werkstoffe für den Förderkanal werden auf den Seiten 581/582 zahlreiche, sehr unterschiedliche Möglichkeiten vorgeschlagen. Auf Seite 581 rechts oben wird gesagt: «Für den praktischen Einsatz muss man in der Regel auf seitliche Kurzschlussschienen verzichten.»

In der US–PS 29 28 349 wird der prinzipielle Aufbau eines Rechteckkanals mit t-förmigen Seitenschienen beschrieben. Diese Anordnung, die zur Verbesserung des Wirkungsgrades einer elektromagnetischen Pumpe beitragen sollte, ist in dieser Ausführungsform für elektrisch leitende Flüssigkeiten, die nicht zu heiss und nicht zu aggressiv sind, sicherlich geeignet. Das Problem der Randgängigkeit und die im Folgenden genauer erläuterten Materialprobleme, die insbesondere bei flüssigem Kupfer auftreten, sind nicht angesprochen.

Zur Lösung solcher Materialprobleme, wie sie bei hohen Temperaturen der elektrisch leitenden Flüssigkeit auftreten, wird jedoch ein Lösungsvorschlag in der NL-PS 125 807 angegeben. Dort wird der Steg der Kurzschlussschienen an den Schmalseiten des Rechteckkanals aus einem Material gefertigt, welches von gleicher Beschaffenheit wie die elektrisch leitende Flüssigkeit ist. Ein vollständiges Abschmelzen dieses Steges muss dabei aber durch eine aufwendige Regelung der Kühlung verhindert werden. Ausserdem müssen beim Einpassen des Kontaktstückes in die Kurzschlussschiene verschiedene Wärmeausdehnungskoeffizienten und die Übergangswiderstände in Kauf genommen werden. Auch in dieser Patentschrift ist das Problem der Randgängigkeit nicht weiter ausgeführt.

Aufgabe der vorliegenden Erfindung ist ein Kanal mit Rechteckquerschnitt zum Regeln oder Fördern eines Flüssigmetallstromes mittels Induktionsspulen. Dieser Kanal soll bei Verwendung für eine Pumpe einen hohen Durchsatz bzw. Druck im Flüssigmetall gewährleisten und bei Verwendung zur Regelung in der Lage sein, den Flüssigmetallstrom in einem möglichst weiten Bereich zu regeln. Eine spezielle Aufgabe der vorliegenden Erfindung ist ein Kanal mit Rechteckquerschnitt zum Regeln oder Fördern eines Stromes von flüssigem Kupfer oder einer Kupferlegierung. Um den Flüssigmetallstrom bei der Regelung möglichst stark zu hemmen, muss die Randgängigkeit weitestgehend vermieden werden, wobei auf eine zusätzliche Kühlung des Rechteckkanals oder der Seitenschienen möglichst verzichtet werden soll.

Zur Lösung dieser Aufgaben wird im Anspruch 1 vorgeschlagen, die t-förmigen Schienen aus einem elektrisch gut leitenden Elektrographit herzustellen und die Breitseiten des Kanals aus einem elektrisch schlechter leitenden Material, vorzugsweise aber ebenfalls Elektrographit herzustellen. Bei der Wahl des Verhältnisses zwischen den elektrischen Widerständen der t-förmigen Schienen und denen der Breitseiten sind die Anforderungen an Wirkungsgrad und Regelbereich zu berücksichtigen. Je besser die Breitseiten des Kanals leiten, um so schlechter wird der Wirkungsgrad, wobei gleichzeitig aber die Randgängigkeit günstig beeinflusst wird. Der wesentliche Vorteil dieses Lösungsvorschlages, besteht in der Wahl des Materials. Flüssiges Kupfer greift Graphit in keiner Weise chemisch an und benetzt die Oberfläche, so dass ein ausgezeichneter elektrischer Kontakt hergestellt wird. Ausserdem ist Graphit auch gegenüber sehr hohen Temperaturen ausgezeichnet beständig und lässt sich gut in den gewünschten Formen herstellen. Verschiedene Vorurteile in der Fachwelt haben jedoch dazu geführt, dass dieses Material bisher nicht bei Kanälen mit Rechteckquerschnitt zum Regeln oder Fördern eines Flüssigmetallstromes zur Anwendung kam. Bei der vorgesehenen Verwendung kommt es nämlich beim Einfüllen des Flüssigmetalls in den Vorratsbehälter, dessen Ausfluss geregelt wird, zu erheblichen Temperaturschocks, von denen man bisher glaubte, dass sie zur Zerstörung von aus Graphit gefertigten Kanalwänden führen würde. Tatsächlich übersteht ein völlig aus Elektrographit gefertigter Kanal unbeschädigt schnelle Temperaturänderungen um mehrere hundert Grad.

Ausserdem wurde in der Fachwelt der elektrische Widerstand von Graphit gegenüber Metallen immer zu hoch eingeschätzt. Wenn elektrisch sehr gut leitende Materialien gesucht wurden, so wurde regelmässig ein Metall eingesetzt. Die entscheidende Eigenschaft von Graphit, nämlich ein mit steigender Temperatur abnehmender elektrischer Widerstand, wurde nicht berücksichtigt. Dabei ist die Abhängigkeit des elektrischen Widerstandes von der Temperatur bei Graphit gerade so, dass bei den Betriebstemperaturen für flüssiges Kupfer ein Minimum angenommen wird und keine sehr starke Abhängigkeit von der örtlichen Temperatur besteht. Im Gegensatz dazu haben alle Metalle einen bei steigender Temperatur grösser werdenden Widerstand, wodurch bei Betriebstemperatur der elektromagnetischen Pumpe schon kein entscheidender Vorteil gegenüber Graphit mehr vorhanden ist. Durch den sehr geringen Übergangswiderstand zwischen Graphit und flüssigem Kupfer ergibt sich ein weiterer Vorteil gegenüber Metallen. Üblicherweise würden Metalle von Kupfer bei dieser Temperatur auflegiert oder abgetragen werden, oder es würden schlecht leitende Übergangsschichten entstehen.

Da in den Randzonen eines Rechteckkanals im Bereich des Stegs der t-förmigen Schienen Ströme im Kiloamperebereich fliessen, ist es wünschenswert, wenn ein Teil dieser Ströme auch noch von den Breitseiten übernommen wird. Bei elektrisch gut leitenden Breitseiten sind aber die Verluste dort sehr hoch, so dass der Wirkungsgrad der Pumpe vermindert wird. Daher muss ein Kompromiss zwischen optimalem Wirkungsgrad und stärkster Unterdrückung der Randgängigkeit gewählt werden. Die vorgeschlagene Ausführung der Breitseiten aus schlechter leitendem Elektrographit ist eine geeignete Lösung. Wenn in diesem Falle die Breitseiten und die t-förmige Schiene mit einem leitfähigen Material verbunden sind, so übernehmen die Breitseiten auch einen Teil des im Randbereich fliessenden Stromes und tragen auch zur Verbesserung der Randgängigkeit bei, ohne dass der Wirkungsgrad zu stark abnimmt.

Im zweiten Anspruch wird in Ausgestaltung der Erfindung vorgeschlagen, die Polschuhe der Induktionsspulen breiter als die lichte Weite des Kanals zu machen, so dass die Stege der Schienen in den Magnetfeldbereich hineinragen. Auf diese Weise werden die störenden Kräfte quer zur Hauptströmungsrichtung aus dem Bereich des Flüssigmetalls heraus in den Bereich der Kurzschlussschiene verlagert. Auch diese Massnahme trägt zu einer Verringerung der Randgängigkeit bei. Diese Massnahme bewirkt unter anderem auch, dass der Kontakt des flüssigen Kupfers zum Graphit nicht durch Wirbelbildung beeinträchtigt wird.

In weiterer Ausgestaltung der Erfindung wird im Anspruch 3 vorgeschlagen, die dem lichten Kanalquerschnitt abgewandte Seite der Schienen mit weiteren Schienen aus einem elektrisch gut leitenden Teil zu verbinden. Da auch im Bereich ausserhalb der eigentlichen Induktionsspulen noch erhebliche Wirbelströme in den Kurzschlussschienen induziert werden, trägt diese Massnahme ebenfalls zu einem günstigen Verlauf der induzierten Ströme bei. Dies elektrisch und wärmetechnisch gut leitende Metall kann in diesem Bereich auch schon wieder Kupfer sein, da sich in den Kurzschlussschienen aus Graphit ein entsprechender Temperaturgradient einstellt.

Im Anspruch 4 wird in zusätzlicher Ausgestaltung vorgeschlagen, den Kanal an seinen Breitseiten mit einer elastischen Wärmeisolierung auszustatten. Dies hilft eventuelle unterschiedliche Wärmeausdehnungen aufzufangen und schützt die angrenzenden Magnetkerne vor hohen Temperaturen. Als wärmeisolierendes Material kommt z.B. Silizium-Oxid, Aluminium-Oxid oder Asbest in Betracht. Als besonders zweckmässig haben sich mehrere aufeinanderfolgende Schichten von Glimmer und Silizium-Oxid herausgestellt. Weiterhin hat es sich bei Versuchen als zweckmässig erwiesen, die Breitseiten des Kanals gegenüber den t-förmigen Schienen mit einem hochtemperaturbeständigen Kitt, beispielsweise einer Graphitaufschlämmung oder einer Silizium-Karbid-Paste bzw. -Mörtel abzudichten.

In den Ansprüchen 5, 6 und 7 werden Ausgestaltungen der Erfindung bezüglich Abmessungen und Eigenschaften angegeben, die sich im Versuch als besonders zweckmässig herausgestellt haben um die erwähnte Randgängigkeit zu vermeiden.

Die Figuren 1 bis 4 zeigen mögliche Ausführungsbeispiele der Erfindung.

Figur 1 zeigt in perspektivischer Darstellung eine Regelvorrichtung.

Figur 2 zeigt in einer gegenüber Figur 1 wesentlich vergrösserten Darstellung einen Querschnitt durch einen Strömungskanal.

Figur 3 zeigt einen Längsschnitt durch die Schmalseiten eines Strömungskanals entsprechend der Linie A–A der Figur 4.

Figur 4 zeigt einen weiteren Querschnitt entsprechend der Linie B–B der Figur 3.

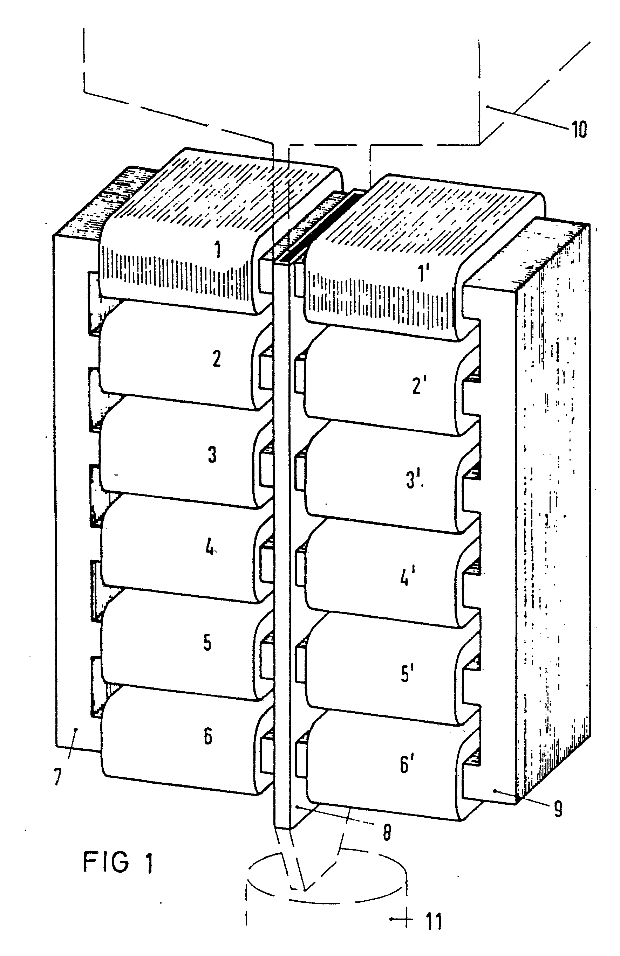

In Figur 1 sind die elektromagnetischen Spulen 1–6 auf den sechs Zähnen eines kammartigen Eisenblechpaketes 7 angeordnet, dessen Zähne auf die breite Seite eines rechteckigen, ringsum geschlossenen Kanals 8 gerichtet sind. Diese Zähne sind in Richtung der Mittelachsen der Spulen von konstantem Querschnitt, damit die Spulen leicht montiert werden können. Auf der gegenüberliegenden breiten Seite dieses Rechteckkanals 8 sind spiegelbildlich gleich die Spulen 1' bis 6' auf einem ebenfalls kammartigen Eisenblechpaket 9 angeordnet. Der Kanal 8 ist an seinem oberen Ende mit einem gestrichelt angedeuteten Flüssigmetallbehälter 10 und an seinem unteren Ende beispielsweise mit einer Kokille 11 verbunden, in der flüssiges Metall abkühlen und erstarren soll. Wenn die Induktionsspulen in geeigneter Weise an die drei Phasen eines Drehstromnetzes angeschlossen sind, entsteht in dem im Kanal 8 vorhandenen flüssigen Metall ein entweder nach oben oder nach unten gerichtetes induktives Wanderfeld, das in gewünschter Weise das aufgrund eines Höhen- bzw. Druckunterschiedes im Kanal 8 fliessende flüssige Metall verzögert oder beschleunigt. Bei einem aufwärtsgerichteten Wanderfeld kann man den abwärtsgerichteten Durchfluss des Flüssigmetalls regeln bzw. dosieren bei einem abwärtsgerichteten Wanderfeld kann man einen bereits aufgrund der Schwerkraft abwärtsgerichteten Durchfluss des Flüssigmetalls erheblich vergrössern.

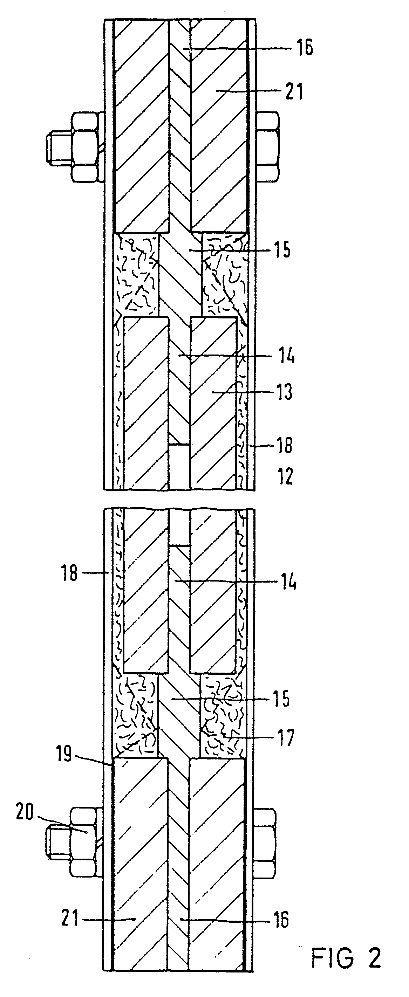

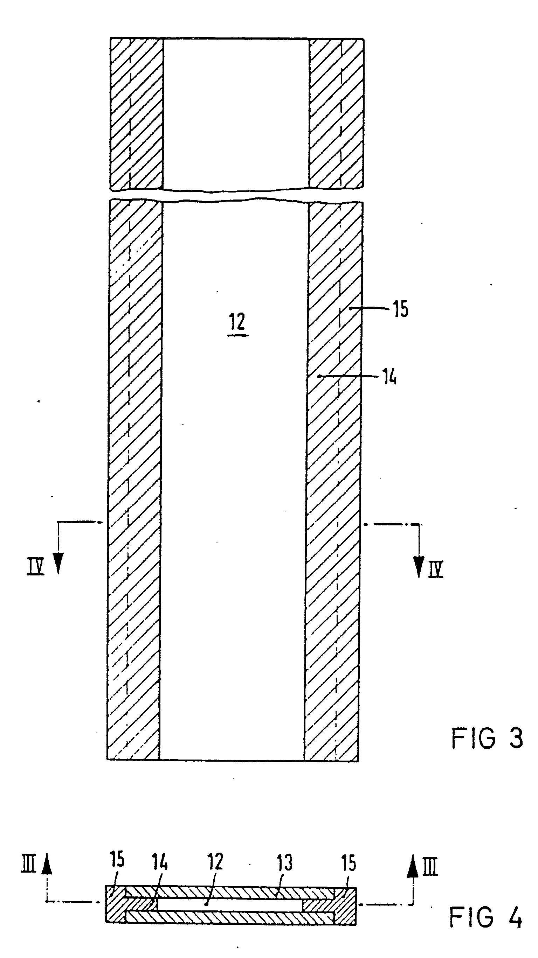

In Figur 2 wird der lichte Kanalquerschnitt 12 von zwei ebenen Platten 13 begrenzt zwischen denen die schmalen Stege 14 der Schienen 15 von hier kreuzförmigem Querschnitt angeordnet sind. Die breiten Stege 16 auf der dem lichten Kanalquerschnitt 12 abgewandten Seite werden berührt von jeweils zwei weiteren Schienen 21 von Rechteckquerschnitt und aus einem elektrisch gut leitenden Metall. Die Platten 13 sind an ihrer Aussenseite mit einem elastischen, wärmeisolierenden Material 17 bedeckt, das wiederum von zwei dünnen metallischen Blechen 18 festgehalten wird. Diese Bleche 18 sind gegenüber den elektrisch leitenden Schienen elektrisch durch eine Schicht 19 isoliert und werden durch Schraubbolzen 20 zusammengehalten. Die vereinfachte Grundform, bei der die Schienen 15 t-förmige Gestalt haben, ist in den Figuren 3 und 4 dargestellt.

## Patentansprüche

1. Kanal mit Rechteckquerschnitt zum Regeln und Fördern eines Flüssigmetallstromes, insbesondere für Kupfer oder dessen Legierungen, mittels Induktionsspulen (1–6; 1'–6') an den Breitseiten (13) des Kanals, wobei jede Schmalseite des Kanals aus einer elektrisch gut leitenden t-förmigen Schiene (15) besteht, deren Steg dem lichten Kanalquerschnitt zugewendet ist, gekennzeichnet durch folgende Merkmale:

a) Die t-förmigen Schienen (15) bestehen aus einem elektrisch gut leitenden Elektrographit.
b) Die Breitseiten (13) des Kanals bestehen aus einem elektrisch schlechter leitenden Material, vorzugsweise ebenfalls Elektrographit.

2. Kanal nach Anspruch 1, gekennzeichnet durch folgende Merkmale:
a) Die Polschuhe des Eisenblechpaketes (7) sind breiter als die lichte Weite des Kanals (8), so dass die Stege der Schienen (15) in den Magnetfeldbereich hineinragen.

3. Kanal nach Anspruch 1 oder 2, gekennzeichnet durch folgende Merkmale:
a) Die dem lichten Kanalquerschnitt (12) abgewandte Seite der Schienen (15) ist mit weiteren Schienen (21) aus einem elektrisch gut leitenden Metall verbunden.

4. Kanal nach Anspruch 1, gekennzeichnet durch folgende Merkmale:
a) Der Kanal (8) ist an seinen Breitseiten mit einer elastischen Wärmeisolierung (17) versehen.

5. Kanal nach Anspruch 1, gekennzeichnet durch folgende Merkmale:
a) Die grösste Breite des lichten Kanalquerschnitts (12) beträgt 2/3 der Breite der angrenzenden Magnetkerne (7, 9).

6. Kanal nach Anspruch 1, gekennzeichnet durch folgende Merkmale:
a) Der spezifische Widerstand des Materials der t-förmigen Schienen (15) ist um einen Faktor 3 geringer als der des Materials der Breitseiten.

7. Kanal nach Anspruch 1, gekennzeichnet durch folgende Merkmale:
a) Zwischen den t-förmigen Schienen und den Breitseiten besteht eine elektrisch gut leitende Verbindung.

## Claims

1. A conduit having a rectangular cross-section for controlling and conveying a stream of liquid metal, in particular for copper or its alloys, by means of induction coils (1–6; 1'–6') at the wide sides (13) of the conduit, each narrow side of the conduit consisting of a highly electrically conductive T-shaped bar (15), the stem part of which faces the inner cross-section of the conduit, characterised by the following features:

a) the T-shaped bars (15) consist of a highly electrically conductive electrographite; and
b) the wide sides (13) of the conduit consist of a less electrically conductive material, preferably also electrographite.

2. A conduit as claimed in Claim 1, characterised by the following feature:
a) the pole shoes of the stack of iron sheets (7) are wider than the inside width of the conduit (8), so that the stem parts of the bars (15) project into the region of the magnetic field.

3. A conduit as claimed in Claim 1 or Claim 2, characterised by the following feature:
a) the sides of the bars (15) which face away from the inner cross-section (12) of the conduit are connected to further bars (21) made of a highly electrically conductive metal.

4. A conduit as claimed in Claim 1, characterised by the following feature:
a) the conduit (8) is provided with an elastic heat insulation (17) on its wide sides.

5. A conduit as claimed in Claim 1, characterised by the following feature:
a) the greatest width of the inner cross-section (12) of the conduit amounts to 2/3 of the width of the adjacent magnetic cores (7, 9).

6. A conduit as claimed in Claim 1, characterised by the following feature:
a) the specific resistance of the material of the T-shaped bars (15) is lower by a factor of 3 than that of the material of the wide sides.

7. A conduit as claimed in Claim 1, characterised by the following feature:
a) a highly electrically conductive connection exists between the T-shaped bars and the wide sides.

**Revendications**

1. Canal à section transversale rectangulaire, pour régler et transporter un courant d'un métal liquide, en particulier pour le cuivre ou ses alliages, à l'aide de bobines à induction (1–6; 1'–6') disposées sur le côté large du canal, chaque côté étroit du canal étant constitué par un rail en forme de t (15) bon conducteur de l'électricité et dont la branche longitudinale est tournée du côté de la section transversale du passage du canal, caractérisé par les moyens remarquables suivants:
a) les rails en forme de t (15) sont constitués par un électrographite bon conducteur d'électricité,
b) les côtés larges (13) du canal sont constitués par un matériau plus mauvais conducteur de l'électricité, de préférence également en électrographite.

2. Canal selon la revendication 1, caractérisé par les moyens remarquables suivants:
a) les pièces polaires du paquet de tôles (7) sont plus larges que la largeur libre intérieure du canal (8), en sorte que les branches longitudinales des rails (15) pénètrent dans la zone du champ magnétique.

3. Canal selon la revendication 1 ou 2, caractérisé par les moyens remarquables suivants:
a) le côté des rails (15) qui est éloigné de la section transversale de passage du canal (12) est relié avec d'autres rails (21) en un métal bon conducteur d'électricité.

4. Canal selon la revendication 1, caractérisé par les moyens remarquables suivants:
a) le canal (8) est pourvu sur ses côtés larges d'une isolation thermique élastique.

5. Canal selon la revendication 1, caractérisé par les moyens remarquables suivants:
a) la plus grande largeur de la section transversale de passage du canal (12) est égale à 2/3 de la largeur des noyaux magnétiques voisins (7, 9).

6. Canal selon la revendication 1, caractérisé par les moyens remarquables suivants:
a) la résistance spécifique du matériau des rails en forme de t (15) est trois fois inférieure à celle du matériau des côtés larges.

7. Canal selon la revendication 1, caractérisé par les moyens remarquables suivants:
a) entre les rails en forme de t et les côtés larges existe une liaison bonne conductrice d'électricité.

FIG 1

FIG 2

FIG 3

FIG 4